# EUROPEAN PATENT SPECIFICATION

(11) **EP 3 499 100 B1**
(45) Date of publication and mention of the grant of the patent: **15.07.2020**
(21) Application number: 17207452.8
(22) Date of filing: 14.12.2017
(51) Int. Cl.: F16K 15/20, A63G 31/12, A63H 3/06

(54) **NOZZLE FOR FAST INFLATION AND DEFLATION**
DÜSE ZUM SCHNELLEN AUFBLASEN UND ABLASSEN VON LUFT
BUSE POUR GONFLAGE ET DÉGONFLAGE RAPIDES

(43) Date of publication of application: 19.06.2019
(73) Proprietor: Dongguan Tiger Point Metal & Plastic Products Co., Ltd., Guang Dong Province (CN)
(72) Inventor: Tsai, Chun-Chung, New Taipei City 251 (TW)
(74) Representative: Gee, Steven William

(56) References cited:
- FR-A3- 2 764 359
- US-A- 1 910 961
- US-A- 5 083 581
- US-A- 5 351 711

## Description

### BACKGROUND OF THE INVENTION

### 1. Field of the Invention

The present invention generally relates to a nozzle for an inflation product, and more specifically to a convenient nozzle for fast air inflation and deflation.

### 2. The Prior Arts

As people live well, many air inflation products are provided to the market such as inflation bed, chair, doll, climbing rock, pool, and so on. The fancy air inflation product always draws a lot of attention because its structure is simple and it is easy to carry and store. Thus, the inflation products are widely used. The inflation product is commonly provided with a nozzle for inflation/deflation, which is generally categorized as two types.

The first type of nozzle comprises a flexible body, an air tube, and a sealing plug. The air tube is connected to one end of the flexible body, and the sealing plug is intended to cover an outer port of the air tube. In this type of nozzle, the air channel between the air tube and the flexible body is free of any block or obstacle. As a result, the sealing plug should quickly and tightly plug the air tube after inflation, or lots of air leaks out.

The second type of nozzle generally comprises a nozzle body and a unidirectional valve. The unidirectional valve comprises an air tube. The internal end of the air tube is sealed, and the internal wall of the air tube is partly cut to form a notch for the unidirectional valve. This solution requires the air tube to form the cut notch, and makes the nozzle hard to process. As a result, the mass production nozzle has a poor yield. In addition, a stream of air flowing into the inflation product for air inflation requires greater pressure, and an air pump with high quality is needed such that flexibility of application is quite limited. Or, the nozzle body should be tightly pressed by hands to fully release the notch and assure lots of air for inflation/deflation. However, the hands are easily tired by pressing the nozzle body of a large scale of inflation product for a while. It is obvious that the inflation products in the prior arts have many problems in actual use.

US patent 1,910,961 discloses a nozzle with an air valve and shares the features of the preamble of claim 1. US patent 5,351,711 discloses a nozzle of an inflatable body with an integral sealing plug for the outer port of the nozzle.

### SUMMARY OF THE INVENTION

To overcome the problems in the prior arts, the primary object of the present invention is to provide a nozzle for fast air inflation and deflation, which has a simple structure, and is easy to implement and use.

To implement the above object, the present invention employs the following solution.

The nozzle for fast air inflation and deflation of the present invention comprises a flexible plastic body having a horn shape and provided with a valve sheet in an internal chamber of the flexible plastic body; and an air tube having a bottom jointed to the flexible plastic body; wherein a region where the valve sheet and the air tube are not in contact forms an air channel for air inflation and deflation, and wherein the air tube can be pushed until the flexible plastic body is deformed and bent toward the valve sheet for keeping or storing air to avoid air leakage for a short period of time, an inner port of the air tube being sealed by the valve sheet; characterised in that a sealing plug is movably connected to an outer port of the air tube for plugging and sealing the outer port, and in that the valve sheet has an arc thin shape, and is provided with a mediate sealing part and two connection parts extending from the mediate sealing part, each of the connection parts having an end narrower than the mediate sealing part.

It is preferred that the flexible plastic body and the air tube are formed as an integrated structure.

Also, the sealing plug and the air tube are preferably formed as an integrated structure, and the sealing plug and the air tube are connected through a flexible connection strip.

It is preferred that the sealing plug is configured to fit and cover the outer port of the air tube.

In contrast with the prior arts, the present invention obviously has advantages and effects. Specifically, the valve sheet is integrated into the conventional nozzle, and provided in the internal chamber of the flexible plastic body. For normal inflation/deflation, a gap is kept between the valve sheet and the inner port of the air tube to naturally open an air channel without pressing the flexible body to directly perform inflation/deflation. To store or keep air, the air tube is pressed or bent downward until the flexible plastic body is deformed downward, and the inner port of the air tube is in contact with the valve sheet such that the inner port is sealed by the valve sheet without air leaking out. Then, the sealing plug is allowed to slowly cover and plug the air tube, thereby overcoming the traditional drawback that a lot of air leaks out because the air tube is not quickly sealed by the sealing plug. The embodiment and the accompanying figures are intended to explain the aspects and features of the present invention.

### BRIEF DESCRIPTION OF THE DRAWINGS

The present invention will be apparent to those skilled in the art by reading the following detailed description of a preferred embodiment thereof, with reference to the attached drawings, in which:
FIG. 1 is a top perspective view showing the nozzle for fast air inflation and deflation according to the embodiment of the present invention;
FIG. 2 is a bottom perspective view showing the nozzle of the present invention;
FIG. 3 is a cross sectional view showing the nozzle for fast air inflation and deflation according to the embodiment of the present invention;
FIG. 4 is another cross sectional view showing the nozzle of the present invention; and
FIG. 5 is a structural view showing the nozzle for storing air according to the present invention.

### DETAILED DESCRIPTION OF THE PREFERRED EMBODIMENT

The accompanying drawings are included to provide a further understanding of the invention, and are incorporated in and constitute a part of this specification. The drawings illustrate embodiments of the invention and, together with the description, serve to explain the principles of the invention.

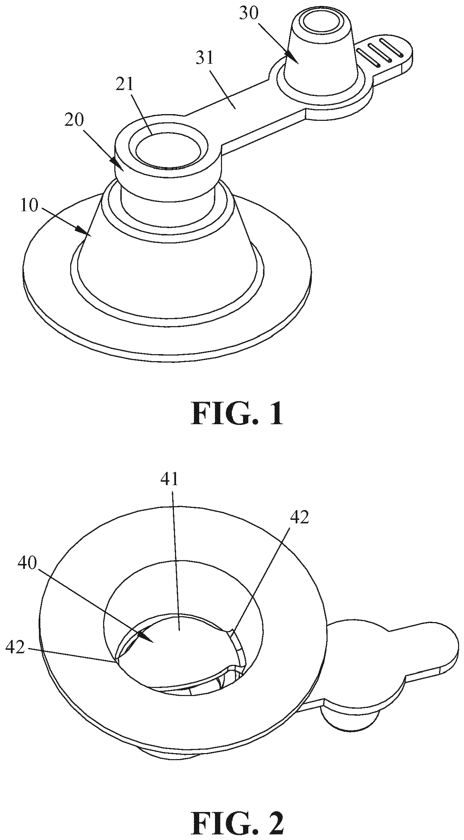

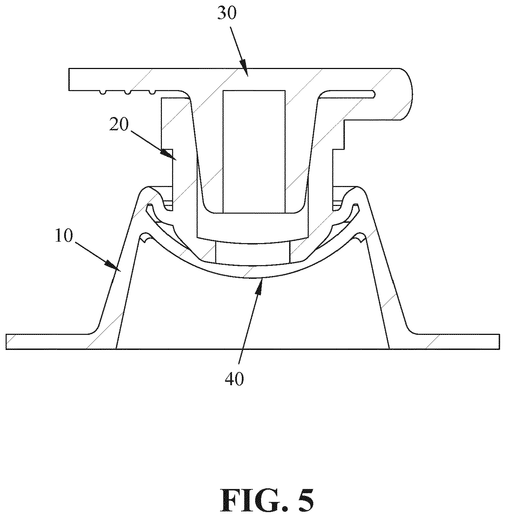

Please refer to FIGs. 1-5 illustrating the detailed structure of the nozzle for fast air inflation and deflation according to the embodiment of the present invention. The nozzle for fast air inflation and deflation of the present invention is a convenient nozzle, and generally comprises a flexible plastic body 10, an air tube 20, and a sealing plug 30.

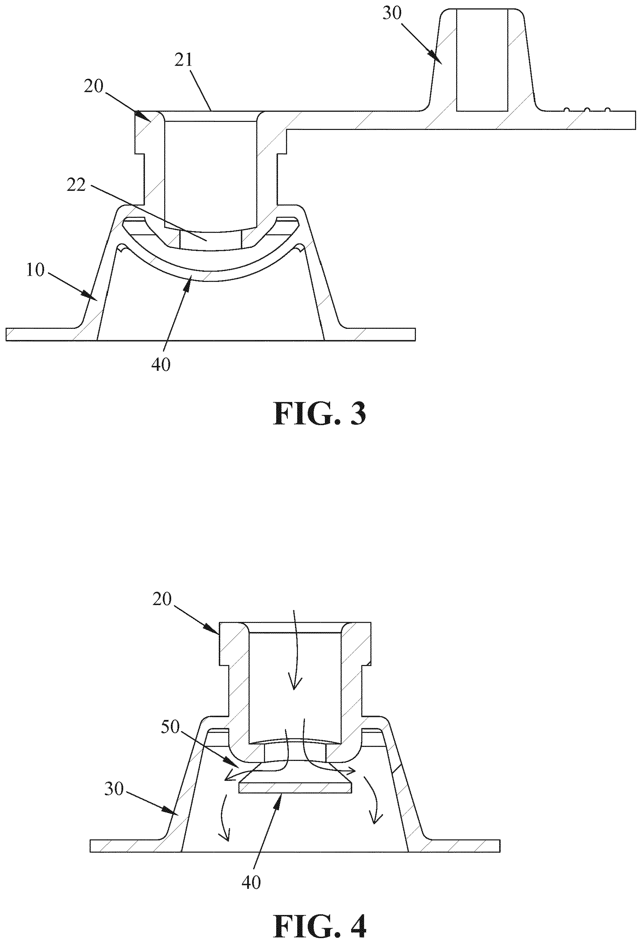

The flexible plastic body 10 has a horn shape, and is connected to a bottom of the air tube 20. The sealing plug 30 is flexibly connected to an outer port 21 of the air tube 20. A valve sheet 40 is provided in an internal chamber of the flexible plastic body 10. As shown in FIG. 4 for air inflation or deflation, a region where the valve sheet 40 and the air tube 20 are not in contact forms an air channel 50. The valve sheet 40 will not hinder inflation/deflation. To store or keep air, the air tube 20 is pushed until the flexible plastic body 10 is deformed and bent toward the valve sheet 40 sealing an inner port 22 of the air tube 20 so as to avoid air leaking out for a short period of time. Then, the air tube 20 is covered, plugged, and sealed by the sealing plug 30.

In the embodiment of the present invention, the valve sheet 40 has an arc thin shape, and is provided with a mediate sealing part 41 and two connection parts 42 outwardly extending from the mediate sealing part 41. The mediate sealing part 41 has an area greater than the inner port 22 of the air tube 20 to assure that the inner port 22 can be tightly sealed. Each connection part 42 has an end narrower than the mediate sealing part 41 such that a stream of air freely flows through the air channel 50 for inflation/deflation, thereby speeding up the whole process of inflation/deflation.

The air tube 20 and the flexible plastic body 10 are formed as an integrated structure, which is simple and easy to manufacture such as one step of plastic moulding or injection. The manufacturing efficiency of the nozzle is greatly improved. The sealing plug 30 and the air tube 20 is formed as an integrated body, and a flexible connection strip 31 is preferably provided between the sealing plug 30 and the air tube 20. When the sealing plug 30 covers and plugs the outer port 21 of the air tube 20, the air tube 20 is well fitted.

From the above mention, the primary feature of the present invention is that the valve sheet 40 is specifically integrated into the conventional nozzle, and provided in the internal chamber of the flexible plastic body 10. For normal inflation/deflation, the air tube 20 is pulled out from the flexible plastic body 10, and the valve sheet 40 and the air tube 20 keep a gap such that the air channel 50 is open, and the process of inflation/deflation is performed without pressing the flexible plastic body 10. To keep or store air, the air tube 20 is pressed or bent downward until the flexible plastic body 10 is deformed downward, and the inner port 22 of the air tube 20 is in contact with the valve sheet 40 such that the inner port 22 is sealed by the valve sheet 40 without air leaking out. Then, the sealing plug is allowed to slowly cover and plug the air tube 20, thereby overcoming the traditional drawback that a lot of air leaks out because the air tube 20 is not quickly enough sealed by the sealing plug 30.

Although the present invention has been described with reference to the preferred embodiments thereof, it is apparent to those skilled in the art that a variety of modifications and changes may be made without departing from the scope of the present invention which is intended to be defined by the appended claims.

## Claims

1. A nozzle for fast inflation and deflation, comprising:
a flexible plastic body (10) having a horn shape and provided with a valve sheet (40) in an internal chamber of the flexible plastic body (10); and
an air tube (20) having a bottom jointed to the flexible plastic body (10);
wherein a region where the valve sheet (40) and the air tube (20) are not in contact forms an air channel (50) for air inflation and deflation, and wherein the air tube (20) can be pushed until the flexible plastic body (10) is deformed and bent toward the valve sheet (40) for keeping or storing air to avoid air leakage for a short period of time, an inner port (22) of the air tube (20) being sealed by the valve sheet;
**characterised in that** a sealing plug (30) is movably connected to an outer port (21) of the air tube (20) for plugging and sealing the outer port (21),
and **in that** the valve sheet (40) has an arc thin shape, and is provided with a mediate sealing part (41) and two connection parts (42) extending from the mediate sealing part (41), each of the connection parts (42) having an end narrower than the mediate sealing part (41).

2. The nozzle as claimed in claim 1, wherein the flexible plastic body (10) and the air tube (20) are formed as an integrated structure.

3. The nozzle as claimed in claim 1, wherein the sealing plug (30) and the air tube (20) are formed as an integrated structure, and the sealing plug (30) and the air tube (20) are connected through a flexible connection strip.

4. The nozzle as claimed in claim 1, wherein the sealing plug (30) is configured to fit and cover the outer port (21) of the air tube (20).

## Patentansprüche

1. Eine Düse zum schnellen Aufblasen und Ablassen, umfassend:
einen flexiblen Kunststoffkörper (10), der eine Hornform aufweist und mit einem Ventilblech (40) in einer inneren Kammer des flexiblen Kunststoffkörpers (10) versehen ist: und
einen Luftschlauch (20) mit einem Boden, der mit dem flexiblen Kunststoffkörper (10) verbunden ist;
wobei ein Bereich, in dem der Ventilblech (40) und der Luftschlauch (20) nicht in Kontakt sind, einen Luftkanal (50) zum Aufblasen und Ablassen von Luft bildet, und wobei der Luftschlauch (20) gedrückt werden kann, bis der flexible Kunststoffkörper (10) verformt und in Richtung des Ventilblechs (40) gebogen ist, um Luft zu halten oder zu speichern, um eine Luftleckage für eine kurze Zeitdauer zu vermeiden, wobei eine innere Öffnung (22) des Luftschlauchs (20) durch das Ventilblech abgedichtet ist;
**dadurch gekennzeichnet, dass** ein Verschlussstopfen (30) beweglich mit einer äußeren Öffnung (21) des Luftschlauchs (20) zum Verschließen und Abdichten der äußeren Öffnung (21) verbunden ist,
und dass das Ventilblech (40) eine bogenförmige dünne Form hat und mit einem mittleren Dichtungsteil (41) und zwei Verbindungsteilen (42) versehen ist, die sich von dem mittleren Dichtungsteil (41) erstrecken, wobei jedes der Verbindungsteile (42) ein Ende hat, das schmaler ist als das mittlere Dichtungsteil (41).

2. Düse nach Anspruch 1, bei der der flexible Kunststoffkörper (10) und der Luft-schlauch (20) als eine integrierte Struktur ausgebildet sind.

3. Düse nach Anspruch 1, wobei der Verschlussstopfen (30) und der Luftschlauch (20) als eine integrierte Struktur ausgebildet sind und der Verschlussstopfen (30) und der Luftschlauch (20) durch eine flexible Anschlussleiste verbunden sind.

4. Düse nach Anspruch 1, bei der der Verschlussstopfen (30) so konfiguriert ist, dass er in die äußere Öffnung (21) des Luftschlauchs (20) passt und diese bedeckt.

## Revendications

1. Une buse pour le gonflage et le dégonflage rapides, comprenant :
un corps en plastique flexible (10) ayant une forme de corne et muni d'une feuille de soupape (40) dans une chambre interne du corps en plastique flexible (10) : et
un tube à air (20) ayant un fond relié au corps en plastique flexible (10) ;
dans lequel une région où la feuille de soupape (40) et le tube à air (20) ne sont pas en contact forme un canal d'air (50) pour le gonflage et le dégonflage de l'air, et dans lequel le tube à air (20) peut être poussé jusqu'à ce que le corps en plastique flexible (10) soit déformé et plié vers la feuille de soupape (40) pour conserver ou stocker l'air afin d'éviter une fuite d'air pendant une courte période de temps, un orifice interne (22) du tube à air (20) étant scellé par la feuille de soupape ;
**caractérisé en ce qu'**un bouchon d'étanchéité (30) est relié de manière mobile à un orifice extérieur (21) du tube à air (20) pour obturer et sceller l'orifice extérieur (21),
et **en ce que** la feuille de soupape (40) a une forme mince en arc, et est munie d'une partie d'étanchéité intermédiaire (41) et de deux parties de connexion (42) s'étendant depuis la partie d'étanchéité intermédiaire (41), chacune des parties de connexion (42) ayant une extrémité plus étroite que la partie d'étanchéité intermédiaire (41).

2. Buse selon la revendication 1, dans laquelle le corps en plastique flexible (10) et le tube à air (20) sont formés comme une structure intégrée.

3. Buse selon la revendication 1, dans laquelle le bouchon d'étanchéité (30) et le tube à air (20) sont formés comme une structure intégrée, et le bouchon d'étanchéité (30) et le tube à air (20) sont reliés par une bande de raccordement flexible.

4. Buse selon la revendication 1, dans laquelle le bouchon d'étanchéité (30) est configuré pour s'adapter et couvrir l'orifice extérieur (21) du tube à air (20).
